# EUROPÄISCHE PATENTANMELDUNG

(11) **EP 4 321 949 A1**
(43) Veröffentlichungstag der Anmeldung: **14.02.2024**
(21) Anmeldenummer: 23186516.3
(22) Anmeldetag: 19.07.2023
(51) Int. Cl.: G05B 19/042

(54) **MODULARE STEUERUNGSEINRICHTUNG**

(30) Priorität: 10.08.2022 DE 102022120198
(71) Anmelder: Pilz GmbH & Co. KG, 73760 Ostfildern (DE)
(72) Erfinder: Bauknecht, Jochen, 73760 Ostfildern (DE); Horter, Hansjürgen, 73760 Ostfildern (DE)
(74) Vertreter: Schäperklaus, Jochen

(57) **Zusammenfassung**

Die Erfindung betrifft eine modulare Steuerungseinrichtung (1), umfassend
- ein zentrales Steuerungsmodul (2) mit einer ersten Logikeinheit (20) und einer zweiten Logikeinheit (21),
- eine erste Gruppe (3) von Elektronikmodulen (3.1, 3.2, 3.3), die an die erste Logikeinheit (20) angeschlossen sind und eine Anzahl von Sicherheitseingängen und Sicherheitsausgängen umfassen, wobei die Elektronikmodule (3.1, 3.2, 3.3) der ersten Gruppe (3) dazu ausgebildet sind, Sicherheitsfunktionen einer Sicherheitssteuerung bereitzustellen,
- eine zweite Gruppe (4) von Elektronikmodulen (4.1, 4.2, 4.3, 4.4), die an die zweite Logikeinheit (21) angeschlossen sind und eine Anzahl von Eingängen und Ausgängen umfassen, wobei die Elektronikmodule (4.1, 4.2, 4.3, 4.4) der zweiten Gruppe (4) dazu ausgebildet sind, Standardfunktionen einer speicherprogrammierbaren Steuerung bereitzustellen,
wobei
- das zentrale Steuerungsmodul (2) und die beiden Gruppen (3, 4) von Elektronikmodulen (3.1, 3.2, 3.3, 4.1, 4.2, 4.3, 4.4) in zumindest einer Modulreihe angeordnet sind,
- die Sicherheitsfunktionen der Elektronikmodule (3.1, 3.2, 3.3) der ersten Gruppe (3) durch deren Positionen in der Modulreihe und/oder durch feste Hardwareeinstellungen definiert sind, und
- die Standardfunktionen der Elektronikmodule (4.1, 4.2, 4.3, 4.4) der zweiten Gruppe (4) programmierbar sind.

## Beschreibung

Die vorliegende Erfindung betrifft eine modulare Steuerungseinrichtung.

Aus dem Stand der Technik sind unterschiedliche Arten von Steuerungseinrichtungen bekannt, die verschiedene Funktionsumfänge aufweisen können. Zu unterscheiden ist hier insbesondere zwischen speicherprogrammierbaren Steuerungen gemäß der europäischen Norm EN 61131 einerseits sowie Sicherheitssteuerungen gemäß der internationalen Norm IEC 61508 andererseits, die zusätzliche Sicherheitsfunktionen zur Verfügung stellen und somit auch in sicherheitskritischen Bereichen zur automatisierten Steuerung sicherheitskritischer Prozesse eingesetzt werden können.

Aus dem Stand der Technik ist es grundsätzlich auch bekannt, speicherprogrammierbare Steuerungen sowie Sicherheitssteuerungen modular aus einer Mehrzahl von Elektronikmodulen, die unterschiedliche Funktionen zur Verfügung stellen, aufzubauen.

Eine modulare speicherprogrammierbare Steuerung umfasst eine Logikeinheit und mehrere daran angeschlossene Elektronikmodule, die eine Anzahl von Eingängen und eine Anzahl von Ausgängen zur Verfügung stellen. An die Eingänge können in bekannter Weise Sensoren angeschlossen werden, die zum Beispiel Informationen über einen Betriebsstatus einer zu steuernden Maschine oder technischen Anlage liefern können und diese als Eingangssignale der speicherprogrammierbaren Steuerung zur Verfügung stellen können. Diese Eingangssignale können mithilfe der Logikeinheit ausgewertet werden, wobei durch logische Verknüpfungen und gegebenenfalls weitere Signal- und Datenverarbeitungsschritte entsprechende Ausgangssignale generiert werden, die über die Ausgänge der Elektronikmodule ausgegeben werden. An die Ausgänge sind Aktoren angeschlossen, welche die Ausgangssignale verarbeiten können und daraufhin bestimmte Aktionen ausführen.

Modulare Sicherheitssteuerungen dienen insbesondere dem Zweck, technische Anlagen oder Maschinen beim Auftreten einer Gefahrensituation sicher in einen für Menschen ungefährlichen Zustand zu überführen. Zu diesem Zweck werden eingangsseitig mittels einer Anzahl von Sicherheitseingängen entsprechende Eingangssignale von Signalgebern beziehungsweise Meldegeräten, bei denen es sich zum Beispiel um Not-Aus-Schalter, Not-Halt-Schalter, Lichtgitter, Lichtvorhänge, Trittmatten, Schutztürpositionsschalter, 3D-Laserscanner etc. handeln kann, empfangen und mittels einer Logikeinheit sicher ausgewertet. Ausgangsseitig werden entsprechende Sicherheitsausgänge eines Ausgangskreises angesteuert. Über diese Sicherheitsausgänge werden beim Auftreten einer Gefahrensituation Aktoren, wie zum Beispiel Schütze, Ventile etc., mit Ausgangssignalen derart angesteuert, dass die an diese Aktoren angeschlossene Maschine/angeschlossenen Maschinen oder technische Anlage in einen für Menschen ungefährlichen Zustand überführt werden kann.

Derartige modulare Sicherheitssteuerungen umfassen mehrere Elektronikmodule, die in zumindest einer Modulreihe angeordnet sind und bestimmte Funktionalitäten aufweisen. Der modulare Aufbau einer Sicherheitssteuerung schafft in vorteilhafter Weise die Möglichkeit einer anwendungsspezifischen Konfiguration, indem mehrere Elektronikmodule individuell zusammengestellt, miteinander verdrahtet und so konfiguriert werden, dass sie die gewünschten Sicherheitsfunktionen zur Verfügung stellen können. Beispiele für Elektronikmodule, aus denen modulare Sicherheitssteuerungen mit ganz unterschiedlichen Sicherheitsfunktionen aufgebaut werden können, sind unter anderem Eingangsmodule, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule, die Ausgangssignale an einen oder mehrere daran angeschlossene Aktoren ausgeben können, kombinierte Eingangs- und Ausgangsmodule (so genannte I/O-Module), Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc.. Bei der Herstellung der modularen Sicherheitssteuerung werden die Elektronikmodule in der zumindest einen Modulreihe aneinandergereiht und entsprechend verdrahtet und so konfiguriert, dass sie die für den konkreten Anwendungszweck unter Sicherheitsaspekten erforderlichen Funktionalitäten zur Verfügung stellen können.

Um die Aufgaben einer Sicherheitssteuerung und einer speicherprogrammierbaren Steuerung zur Verfügung zu stellen, sind zwei Geräte erforderlich, wodurch insbesondere ein entsprechend großer Platzbedarf, ein hoher Installations- und Verdrahtungsaufwand und eine große Anzahl von Relaiskontakten resultieren.

Die Aufgabe der vorliegenden Erfindung besteht darin, eine modulare Steuerungseinrichtung zur Verfügung zu stellen, die einen erweiterten Funktionsumfang aufweist.

Die Lösung dieser Aufgabe liefert eine modulare Steuerungseinrichtung mit den Merkmalen des Anspruchs 1. Die Unteransprüche betreffen vorteilhafte Weiterbildungen der Erfindung.

Eine erfindungsgemäße modulare Steuerungseinrichtung umfasst
- ein zentrales Steuerungsmodul mit einer ersten Logikeinheit und einer zweiten Logikeinheit,
- eine erste Gruppe von Elektronikmodulen, die an die erste Logikeinheit angeschlossen sind und eine Anzahl von Sicherheitseingängen und Sicherheitsausgängen umfassen, wobei die Elektronikmodule der ersten Gruppe dazu ausgebildet sind, Sicherheitsfunktionen einer Sicherheitssteuerung bereitzustellen,
- eine zweite Gruppe von Elektronikmodulen, die an die zweite Logikeinheit angeschlossen sind und eine Anzahl von Eingängen und Ausgängen umfassen, wobei die Elektronikmodule der zweiten Gruppe dazu ausgebildet sind, Standardfunktionen einer speicherprogrammierbaren Steuerung bereitzustellen,
   wobei
- das zentrale Steuerungsmodul und die beiden Gruppen von Elektronikmodulen in zumindest einer Modulreihe angeordnet sind,
- die Sicherheitsfunktionen der Elektronikmodule der ersten Gruppe durch deren Positionen in der Modulreihe und/oder durch feste Hardwareeinstellungen definiert sind, und
- die Standardfunktionen der Elektronikmodule der zweiten Gruppe programmierbar sind.

Die erfindungsgemäße modulare Steuerungseinrichtung hat den Vorteil, dass die Funktionen einer Sicherheitssteuerung, insbesondere das sichere Abschalten, und einer speicherprogrammierbaren Steuerung gemeinsam in einem einzigen Gerät zur Verfügung gestellt werden. Daraus resultieren insbesondere Platz- und Kostenvorteile. Die Sicherheitsfunktionen der modularen Steuerungseinrichtung, die mithilfe der ersten Gruppe von Elektronikmodulen zur Verfügung gestellt werden, sind softwareseitig nicht veränderbar, sondern fest eingestellt beziehungsweise durch die Modulreihenfolge fest vorgegeben. Im Gegensatz dazu sind die Funktionen der Elektronikmodule der zweiten Gruppe, bei denen es sich um Standardfunktionen einer speicherprogrammierbaren Steuerung handelt, frei programmierbar. Über ein entsprechendes Programmierwerkzeug können die zweite Logikeinheit und damit auch die Standardfunktionen der Elektronikmodule der zweiten Gruppe programmiert werden. Das Programmierwerkzeug kann zum Beispiel mittels eines Computers oder app-basiert mittels eines Tablet-PCs oder eines Smartphones ausgeführt werden. Das Programmierwerkzeug kann auch cloud-basiert ausgebildet sein.

Durch die feste, vom Einrichter unveränderbare Einstellung der Sicherheitsfunktionen der Elektronikmodule der ersten Gruppe, die durch das Programmierwerkzeug nicht verändert werden können, kann der Einrichter der modularen Steuerungseinrichtung in Bezug auf die Sicherheitsfunktionen keine sicherheitskritischen Fehler machen, da er nur die Standardfunktionen der speicherprogrammierbaren Steuerung programmieren kann. Aus der festen und damit von einem Nutzer nicht veränderbaren Einstellung der Sicherheitsfunktionen der Elektronikmodule der ersten Gruppe resultiert auch eine erleichterte Zulassung durch die zuständigen Prüfbehörden. Eine Änderung der Standardfunktionen durch Umprogrammierung der Elektronikmodule der zweiten Gruppe und/oder der Austausch eines oder mehrerer Elektronikmodule der zweiten Gruppe sind möglich, ohne dass eine neue Sicherheitszulassung beziehungsweise Sicherheitsbetrachtung der modularen Steuerungseinrichtung erforderlich wird, da die Sicherheitsfunktionen der modularen Steuerungseinrichtung durch diese Maßnahmen nicht verändert beziehungsweise beeinträchtigt werden.

Um die Inbetriebnahme der modularen Steuerungseinrichtung zu vereinfachen, besteht in einer vorteilhaften Ausführungsform die Möglichkeit, dass die erste Logikeinheit dazu ausgebildet ist, die Positionen der Elektronikmodule der ersten Gruppe in der Modulreihe und/oder die festen Hardwareeinstellungen der Elektronikmodule der ersten Gruppe automatisch zu erfassen.

Vorzugsweise können die festen Hardwareeinstellungen der Elektronikmodule der ersten Gruppe feste Einstellungen von Potentiometern und/oder Schaltern, insbesondere DIP-Schaltern, der Elektronikmodule der ersten Gruppe umfassen. Die festen Einstellungen von Potentiometern und/oder Schaltern, insbesondere DIP-Schaltern, der Elektronikmodule der ersten Gruppe können herstellerseitig sehr einfach vorgenommen werden.

In einer bevorzugten Ausführungsform wird vorgeschlagen, dass die zweite Logikeinheit dazu eingerichtet ist, Daten von der ersten Logikeinheit und/oder Eingangssignale der Elektronikmodule der ersten Gruppe zu empfangen und zu verarbeiten.

In einer besonders bevorzugten Ausführungsform besteht die Möglichkeit, dass das zentrale Steuerungsmodul eine bidirektionale Kommunikationsschnittstelle, insbesondere einen Datenbus, zwischen den beiden Logikeinheiten aufweist.

In einer vorteilhaften Weiterbildung kann vorgesehen sein, dass die zweite Logikeinheit dazu eingerichtet ist, Abschaltsignale für die Sicherheitsausgänge der Elektronikmodule der ersten Gruppe zu erzeugen.

In einer Ausführungsform kann vorgesehen sein, dass die zweite Logikeinheit dazu eingerichtet ist, Freigabeentzugssignale für die Sicherheitsausgänge der Elektronikmodule der ersten Gruppe zu erzeugen. Dadurch kann verhindert werden, dass über die Sicherheitsausgänge der Elektronikmodule der ersten Gruppe Einschaltsignale ausgegeben werden.

Um das mithilfe der modularen Steuerungseinrichtung erreichbare Sicherheitsniveau zu erhöhen, wird in einer vorteilhaften Ausführungsform vorgeschlagen, dass die erste Logikeinheit redundant ausgebildet ist.

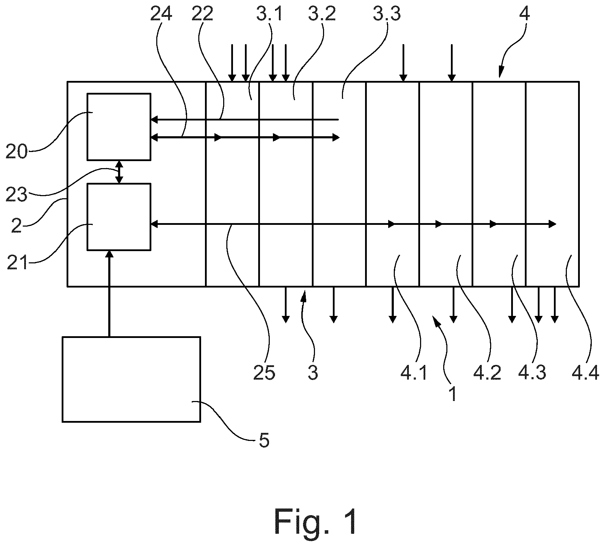

Weitere Merkmale und Vorteile eines Ausführungsbeispiels der Erfindung werden nachfolgend unter Bezugnahme auf Fig. 1 beschrieben, die eine modulare Steuerungseinrichtung in schematisch stark vereinfachter Form zeigt.

Es ist nicht notwendig, dass eine erfindungsgemäße modulare Steuerungseinrichtung 1 alle nachfolgend beschriebenen Merkmale aufweist. Es ist auch möglich, dass eine erfindungsgemäße modulare Steuerungseinrichtung 1 nur einzelne Merkmale des nachfolgend beschriebenen Ausführungsbeispiels aufweist.

Die modulare Steuerungseinrichtung 1 weist ein zentrales Steuerungsmodul 2, welches häufig auch als Kopfmodul bezeichnet wird, eine erste Gruppe 3 von Elektronikmodulen 3.1, 3.2, 3.3 sowie eine zweite Gruppe 4 von Elektronikmodulen 4.1, 4.2, 4.3, 4.4 auf. Die beiden Gruppen 3, 4 von Elektronikmodulen 3.1, 3.2, 3.3 und 4.1, 4.2, 4.3, 4.4 sind zusammen mit dem zentralen Steuerungsmodul 2 in einer Modulreihe angeordnet. Das zentrale Steuerungsmodul 2 umfasst eine erste Logikeinheit 20, die zumindest der ersten Gruppe 3 von Elektronikmodulen 3.1, 3.2, 3.3 zugeordnet ist sowie eine zweite Logikeinheit 21, die zumindest der zweiten Gruppe 4 von Elektronikmodulen 4.1, 4.2, 4.3, 4.4 zugeordnet ist. Die beiden Logikeinheiten 20, 21 stehen über eine bidirektionale Kommunikationsschnittstelle 23, insbesondere über einen Datenbus, in Kommunikationsverbindung miteinander, so dass während des Betriebs der modularen Steuerungseinrichtung 1 ein Datenaustausch zwischen den beiden Logikeinheiten 20, 21 erfolgen kann. Vorzugsweise kann die erste Logikeinheit 20 redundant ausgeführt sein, um die Ausfallsicherheit zu erhöhen. Diese Redundanz der ersten Logikeinheit 20 wurde in Fig. 1 durch eine diagonale Linie veranschaulicht.

Die Elektronikmodule 3.1, 3.2, 3.3 der ersten Gruppe 3 sowie die erste Logikeinheit 20 bilden einen Sicherheitsfunktionsteil der modularen Steuerungseinrichtung 1 und die Elektronikmodule 4.1, 4.2, 4.3, 4.4 der zweiten Gruppe 4 sowie die zweite Logikeinheit 21 bilden einen Standardfunktionsteil der modularen Steuerungseinrichtung 1.

Die Elektronikmodule 3.1, 3.2, 3.3 der ersten Gruppe 3 sind dabei aus einer Vielzahl unterschiedlicher Elektronikmodultypen ausgewählt, die dazu eingerichtet sind, Funktionen einer Sicherheitssteuerung gemäß der internationalen Norm IEC 61508 bereitzustellen. Bei den Elektronikmodulen 3.1, 3.2, 3.3 der ersten Gruppe 3 kann es sich zum Beispiel um folgende Elektronikmodultypen handeln:
- Eingangsmodule mit einem oder mehreren Sicherheitseingängen, über die Eingangssignale eines oder mehrerer Signalgeber, wie zum Beispiel Eingangssignale von Sensoren oder Notbefehlsgeräten, sicher empfangen werden können,
- Ausgangsmodule mit einem oder mehreren Sicherheitsausgängen, über die Ausgangssignale, insbesondere Einschaltsignale und Abschaltsignale, an einen oder mehrere daran angeschlossene Aktoren sicher ausgegeben werden können,
- kombinierte Eingangs- und Ausgangsmodule (so genannte I/O-Module), die Sicherheitseingänge und Sicherheitsausgänge aufweisen, sowie
- Schnittstellenmodule, Feldbuscontroller, Feldbuskoppler, etc. Diese Aufzählung der Elektronikmodultypen ist nicht als abschließend zu verstehen.

Die Sicherheitseingänge und die Sicherheitsausgänge der Elektronikmodule 3.1, 3.2, 3.3 der ersten Gruppe 3 wurden in Fig. 1 durch entsprechende Pfeile symbolisiert.

Die erste Logikeinheit 20 steht über eine bidirektionale Kommunikationsschnittstelle 24, insbesondere über einen Datenbus, mit den Elektronikmodulen 3.1, 3,2, 3.3 der ersten Gruppe 3 in Kommunikationsverbindung, so dass während des Betriebs der modularen Steuerungseinrichtung 1 ein Datenaustausch zwischen der ersten Logikeinheit 20 und den Elektronikmodulen 3.1, 3,2, 3.3 der ersten Gruppe 3 erfolgen kann.

Die Anzahl und Art der verwendeten Elektronikmodule 3.1, 3.2, 3.3 hängt unmittelbar vom geplanten Einsatz- und Verwendungszweck der modularen Steuerungseinrichtung 1 und insbesondere auch von dem mittels der Elektronikmodule 3.1, 3.2, 3.3 der ersten Gruppe 3 zu erreichenden Sicherheitsniveau ab. Generell besteht die Aufgabe der Elektronikmodule 3.1, 3.2, 3.3 der ersten Gruppe 3 darin, beim Auftreten einer Gefahrensituation, die von den Sensoren beziehungsweise Meldegeräten erfasst wird, die an die Sicherheitsausgänge der Elektronikmodule 3.1, 3.2, 3.3 der ersten Gruppe 3 angeschlossenen Aktoren sicherheitsgerichtet abzuschalten und nach dem Ende der Gefahrensituation auch wieder einzuschalten.

Die Sicherheitsfunktionen der Elektronikmodule 3.1, 3.2, 3.3 der ersten Gruppe 3 werden nur durch die Reihenfolge, in der die Elektronikmodule 3.1, 3.2, 3.3 der ersten Gruppe 3 in der Modulreihe angeordnet sind, und/oder durch Hardwareeinstellungen, wie zum Beispiel durch bestimmte (feste) Drehstellungen von Potentiometern und/oder durch bestimmte (feste) Einstellungen von Schaltern, insbesondere DIP-Schaltern, definiert. Mit anderen Worten sind die Sicherheitsfunktionen der modularen Steuerungseinrichtung 1 softwareseitig nicht veränderbar, sondern fest eingestellt.

Die erste Logikeinheit 20 ist vorzugsweise dazu eingerichtet, die Reihenfolge, in der die Elektronikmodule 3.1, 3.2, 3.3 der ersten Gruppe 3 in der Modulreihe angeordnet sind, und/oder die Hardwareeinstellungen der Elektronikmodule 3.1, 3.2, 3.3 der ersten Gruppe 3, insbesondere die festen Drehstellungen von Potentiometern und/oder die festen Einstellungen von Schaltern der Elektronikmodule 3.1, 3.2, 3.3 der ersten Gruppe 3, automatisiert auszulesen und zu verarbeiten. Dieses wurde in Fig. 1 durch den Pfeil 22 symbolisiert.

Die Elektronikmodule 4.1, 4,2, 4.3, 4.4 der zweiten Gruppe 4 sind aus einer Vielzahl unterschiedlicher Elektronikmodultypen ausgewählt, die dazu eingerichtet sind, Funktionen einer speicherprogrammierbaren Steuerung gemäß der europäischen Norm EN 61131 zu realisieren. Die zweite Logikeinheit 21 steht über eine bidirektionale Kommunikationsschnittstelle 25, insbesondere über einen Datenbus, mit den Elektronikmodulen 4.1, 4,2, 4.3, 4.4 der zweiten Gruppe 4 in Kommunikationsverbindung, so dass während des Betriebs der modularen Steuerungseinrichtung 1 ein Datenaustausch zwischen der zweiten Logikeinheit 21 und den Elektronikmodulen 4.1, 4,2, 4.3, 4.4 der zweiten Gruppe 4 erfolgen kann. Die Elektronikmodule 4.1, 4,2, 4.3, 4.4 der zweiten Gruppe 4 können in an sich bekannter Weise einen oder mehrere Eingänge und/oder einen oder mehrere Ausgänge aufweisen. Die Eingänge und die Ausgänge der Elektronikmodule 4.1, 4.2, 4.3, 4.4 der zweiten Gruppe 4 wurden in Fig. 1 ebenfalls durch entsprechende Pfeile symbolisiert.

An die Eingänge der Elektronikmodule 4.1, 4,2, 4.3, 4.4 der zweiten Gruppe 4 können insbesondere Sensoren angeschlossen werden, die zum Beispiel Informationen über einen Betriebsstatus einer Maschine oder einer technischen Anlage liefern können und diese als Eingangssignale der zweiten Logikeinheit 21 zur Verfügung stellen können. Diese Eingangssignale werden mithilfe der zweiten Logikeinheit 21 ausgewertet, wobei durch logische Verknüpfungen und gegebenenfalls weitere Signal- und Datenverarbeitungsschritte Ausgangssignale generiert werden, die über die Ausgänge der Elektronikmodule 4.1, 4,2, 4.3, 4.4 der zweiten Gruppe 4 ausgegeben werden. An diese Ausgänge sind Aktoren angeschlossen, welche die Ausgangssignale verarbeiten können und daraufhin bestimmte Aktionen ausführen können.

Die Funktionen der Elektronikmodule 4.1, 4,2, 4.3, 4.4 der zweiten Gruppe 4, bei denen es sich um Standardfunktionen einer speicherprogrammierbaren Steuerung handelt, sind im Gegensatz zu den Sicherheitsfunktionen der Elektronikmodule 3.1, 3.2, 3.3 der ersten Gruppe 3 frei programmierbar. Über ein entsprechendes Programmierwerkzeug 5 können die zweite Logikeinheit 21 und damit auch die Funktionen der Elektronikmodule 4.1, 4,2, 4.3, 4.4 der zweiten Gruppe 4 programmiert werden. Das Programmierwerkzeug 5 kann zum Beispiel mittels eines Computers oder app-basiert mittels eines Tablet-PCs oder eines Smartphones ausgeführt werden. Das Programmierwerkzeug 5 kann auch cloud-basiert ausgebildet sein.

Vorzugsweise können die beiden Logikeinheiten 20, 21 so konfiguriert sein, dass alle Daten des Sicherheitsfunktionsteils der modularen Sicherheitsschaltvorrichtung 1, wie zum Beispiel die Eingangsdaten der Sicherheitseingänge der Elektronikmodule 3.1, 3.2, 3.3 der ersten Gruppe 3, auch als Eingangssignale im Standardfunktionsteil der modularen Sicherheitsschaltvorrichtung 1 verwendbar sind und von der zweiten Logikeinheit 21 empfangen und verarbeitet werden können.

Ferner können die Logikeinheiten 20, 21 vorzugsweise so konfiguriert sein, dass die zweite Logikeinheit 21 die Sicherheitsausgänge der Elektronikmodule 3.1, 3.2, 3.3 der ersten Gruppe 3 ebenfalls ansteuern kann, jedoch nur deren Freigabe entziehen kann beziehungsweise abschalten kann und nicht bei nicht aktivierter Sicherheitsfunktion einschalten kann. Dabei handelt es sich um ein so genanntes "Enable"-Prinzip.

Ein wesentlicher Vorteil der hier beschriebenen modularen Steuerungseinrichtung 1 besteht darin, dass die Funktionen einer Sicherheitssteuerung und einer speicherprogrammierbaren Steuerung gemeinsam in einem einzigen Gerät zur Verfügung gestellt werden. Daraus resultieren insbesondere Platz- und Kostenvorteile. Ferner können die Sicherheitsausgänge der Elektronikmodule 3.1, 3.2, 3.3 der ersten Gruppe 3, welche die Sicherheitsfunktionen der modularen Steuerungseinrichtung 1 zur Verfügung stellen, in vorteilhafter Weise auch für die Prozesssteuerung verwendet werden, so dass Relaiskontakte eingespart werden können.

Durch die feste Einstellung der Sicherheitsfunktionen der Elektronikmodule 3.1, 3.2, 3.3 der ersten Gruppe 3, die durch das Programmierwerkzeug 5 nicht verändert werden können, kann der Einrichter in Bezug auf die Sicherheitsfunktionen keine sicherheitskritischen Fehler machen, da er nur die Standardfunktionen der speicherprogrammierbaren Steuerung programmieren kann und nicht auf die hardwareseitig implementierten Sicherheitsfunktionen zugreifen kann.

Durch die feste und damit von einem Nutzer nicht veränderbare Einstellung der Sicherheitsfunktionen der Elektronikmodule 3.1, 3.2, 3.3 der ersten Gruppe 3 resultiert auch eine erleichterte Zulassung durch die zuständigen Prüfbehörden. Eine Änderung der Standardfunktionen durch Umprogrammierung der Elektronikmodule 4.1, 4.2, 4.3, 4.4 der zweiten Gruppe und/oder der Austausch eines oder mehrerer Elektronikmodule 4.1, 4.2, 4.3, 4.4 der zweiten Gruppe 4 sind möglich, ohne dass eine neue Sicherheitszulassung beziehungsweise Sicherheitsbetrachtung der modularen Steuerungseinrichtung 1 erforderlich ist.

Sollte es bei dem Gerät, auf dem das Programmierwerkzeug ausgeführt wird, zu Sicherheitsproblemen kommen, führen diese in vorteilhafter Weise nicht zu Sicherheitsproblemen der modularen Steuerungseinrichtung 1, da über das Programmierwerkzeug kein Zugriff auf die Sicherheitsfunktionen der Elektronikmodule 3.1, 3.2, 3.3 der ersten Gruppe 3 möglich ist. Die Konfiguration der Sicherheitsfunktionen der Elektronikmodule 3.1, 3.2, 3.3 der ersten Gruppe 3 ist somit maximal konservativ, da nur HardwareEinstellungen möglich sind, wohingegen die softwarebasierte Konfiguration der Standardfunktionen der Elektronikmodule 4.1, 4.2, 4.3, 4.4 der zweiten Gruppe 4 sehr flexibel und offen gestaltet werden kann.

## Patentansprüche

1. Modulare Steuerungseinrichtung (1), umfassend
- ein zentrales Steuerungsmodul (2) mit einer ersten Logikeinheit (20) und einer zweiten Logikeinheit (21),
- eine erste Gruppe (3) von Elektronikmodulen (3.1, 3.2, 3.3), die an die erste Logikeinheit (20) angeschlossen sind und eine Anzahl von Sicherheitseingängen und Sicherheitsausgängen umfassen, wobei die Elektronikmodule (3.1, 3.2, 3.3) der ersten Gruppe (3) dazu ausgebildet sind, Sicherheitsfunktionen einer Sicherheitssteuerung bereitzustellen,
- eine zweite Gruppe (4) von Elektronikmodulen (4.1, 4.2, 4.3, 4.4), die an die zweite Logikeinheit (21) angeschlossen sind und eine Anzahl von Eingängen und Ausgängen umfassen, wobei die Elektronikmodule (4.1, 4.2, 4.3, 4.4) der zweiten Gruppe (4) dazu ausgebildet sind, Standardfunktionen einer speicherprogrammierbaren Steuerung bereitzustellen,
wobei
- das zentrale Steuerungsmodul (2) und die beiden Gruppen (3, 4) von Elektronikmodulen (3.1, 3.2, 3.3, 4.1, 4.2, 4.3, 4.4) in zumindest einer Modulreihe angeordnet sind,
- die Sicherheitsfunktionen der Elektronikmodule (3.1, 3.2, 3.3) der ersten Gruppe (3) durch deren Positionen in der Modulreihe und/oder durch feste Hardwareeinstellungen definiert sind, und
- die Standardfunktionen der Elektronikmodule (4.1, 4.2, 4.3, 4.4) der zweiten Gruppe (4) programmierbar sind.

2. Modulare Steuerungseinrichtung (1) nach Anspruch 1, **dadurch gekennzeichnet, dass** die erste Logikeinheit (20) dazu ausgebildet ist, die Positionen der Elektronikmodule (3.1, 3.2, 3.3) der ersten Gruppe (3) in der Modulreihe und/oder die festen Hardwareeinstellungen der Elektronikmodule (3.1, 3.2, 3.3) der ersten Gruppe (3) automatisch zu erfassen.

3. Modulare Steuerungseinrichtung (1) nach einem der Ansprüche 1 oder 2, **dadurch gekennzeichnet, dass** die festen Hardwareeinstellungen der Elektronikmodule (3.1, 3.2, 3.3) der ersten Gruppe (3) feste Einstellungen von Potentiometern und/oder Schaltern, insbesondere DIP-Schaltern, der Elektronikmodule (3.1, 3.2, 3.3) der ersten Gruppe (3) umfassen.

4. Modulare Steuerungseinrichtung (1) nach einem der Ansprüche 1 bis 3, **dadurch gekennzeichnet, dass** die zweite Logikeinheit (21) dazu eingerichtet ist, Daten von der ersten Logikeinheit (20) und/oder Eingangssignale der Elektronikmodule (3.1, 3.2, 3.3) der ersten Gruppe (3) zu empfangen und zu verarbeiten.

5. Modulare Steuerungseinrichtung (1) nach einem der Ansprüche 1 bis 4, **dadurch gekennzeichnet, dass** das zentrale Steuerungsmodul (2) eine bidirektionale Kommunikationsschnittstelle (23), insbesondere einen Datenbus, zwischen den beiden Logikeinheiten (20, 21) aufweist.

6. Modulare Steuerungseinrichtung (1) nach einem der Ansprüche 1 bis 5, **dadurch gekennzeichnet, dass** die zweite Logikeinheit (21) dazu eingerichtet ist, Abschaltsignale für die Sicherheitsausgänge der Elektronikmodule (3.1, 3.2, 3.3) der ersten Gruppe (3) zu erzeugen.

7. Modulare Steuerungseinrichtung (1) nach einem der Ansprüche 1 bis 6, **dadurch gekennzeichnet, dass** die zweite Logikeinheit (21) dazu eingerichtet ist, Freigabeentzugssignale für die Sicherheitsausgänge der Elektronikmodule (3.1, 3.2, 3.3) der ersten Gruppe (3) zu erzeugen.

8. Modulare Steuerungseinrichtung (1) nach einem der Ansprüche 1 bis 7, **dadurch gekennzeichnet, dass** die erste Logikeinheit (20) redundant ausgebildet ist.
